# EUROPÄISCHE PATENTSCHRIFT

(11) **EP 0 491 160 B1**
(45) Veröffentlichungstag und Bekanntmachung des Hinweises auf die Patenterteilung: **29.01.1997**
(21) Anmeldenummer: 91119214.4
(22) Anmeldetag: 12.11.1991
(51) Int. Cl.: B29C 47/92, B29C 47/82

(54) **Verfahren und Vorrichtung zur Regelung der Temperatur der von einem Schweissextruder plastifizierten Kunststoffmasse**
Process and apparatus for the regulation of the plastic mass temperature in an extruder gun
Procédé et dispositif pour la régulation de la température de la masse plastique dans un pistolet d'extrusion

(30) Priorität: 20.11.1990 DE 4037020
(43) Veröffentlichungstag der Anmeldung: 24.06.1992
(73) Patentinhaber: HEINRICH KOCH PLASTMASCHINEN GmbH, 53721 Siegburg (DE)
(72) Erfinder: Dohle, Peter, W-5207 Ruppichteroth (DE)
(74) Vertreter: Harwardt, Günther, Dipl.-Ing.

(56) Entgegenhaltungen:
- EP-A- 0 364 701
- DE-A- 2 119 136
- DE-A- 3 131 695
- US-A- 3 728 058
- US-A- 3 758 001

## Beschreibung

Die Erfindung betrifft ein Verfahren und Vorrichtung zur Regelung der Temperatur der von einem Schweißextruder plastifizierten Kunststoffmasse, der zum Plastifizieren eine in einem Zylindergehäuse drehend antreibbar angeordnete Schnecke aufweist, wobei das Zylindergehäuse zumindest über einen Teil seiner Länge durch eine Heizung sowohl während des Schweißbetriebes als auch während der Stillstandsphasen beheibar ist und welcher an das Schneckenende anschließend eine Schweißdüse aufweist, aus der das Schweißmaterial plastifiziert austritt, welches dem Zylindergehäuse als strangförmiger Kunststoffdraht zugeführt wird.

Ein solches Verfahren und eine solche Vorrichtung sind aus der US-A-3 758 001 für die Versiegelung von Stoßstellen und Nähten bekannt. Bei Stillstand erfolgt eine Herunterregelung der Temperatur. Die Temperaturmessung erfolgt durch Feststellung der Wandtemperatur des Zylindergehäuses.

In der US-A-3 728 058 ist eine Spritzgießmaschine beschrieben, bei der ein Thermofühler im Bereich zwischen Schneckenende und der Austrittsdüse angeordnet ist und der die Temperatur der plastifizierten Kunststoffmasse mißt. Aus der gemessenen Temperatur folgt eine Einflußnahme auf die Massetemperatur vorwiegend durch eine Veränderung der Schneckengeschwindigkeit und bei Extrembedingungen der Gehäusetemperatur.

Bei Schweißextrudern ist es bekannt, die Wandtemperatur des Zylindergehäuses etwa im mittleren Scheckenabschnitt zu messen. Dem Regelkreis für die Temperaturregelung wird ein Sollwert für die Temperatur des Zylindergehäuses vorgegeben, welche auf Erfahrungen beruht, die auf Messungen der Temperatur mit einem schnell reagierenden Thermometer der Temperatur des aus der Schweißdüse austretenden Schweißstranges begründet ist.

Der Schweißextruder wird in Betrieb gesetzt, das heißt, dessen Schnecke drehend angetrieben, bis der Temperaturfühler anzeigt, daß der eingestellte Sollwert der Temperatur des Zylindergehäuses erreicht ist. Erst dann wird nach nochmaliger Kontrolle der Temperatur des austretenden Schweißstranges mit den Schweißarbeiten begonnen. Von Nachteil bei dieser Betriebsweise ist, daß jeweils nach vorübergehender Unterbrechung der Schweißarbeiten ein neuer Anlaufvorgang erfolgen muß, bevor die Schweißarbeiten wieder aufgenommen werden dürfen. Schweißextruder sind Handgeräte. Daher ist die bekannte Vorgehensweise aufwendig und nicht zuverlässig, da während der Durchführung der Schweißarbeiten keine Messungen der Temperatur des plastifizierten Materials vorgenommen werden kann. Eine Messung in der Schweißnaht ist nicht möglich, da hierbei die Schweißnaht durch den einzuführenden Fühler des separaten Thermometers beschädigt würde. Darüber hinaus wird, da nach jeder Stillstandsphase eine Anlaufphase folgen muß, auch mehr Schweißmaterial verbraucht, als für die eigentliche Schweißnaht erforderlich ist. Unsicherheiten resultieren auch aus den unterschiedlichen Meßorten hinsichtlich der Messung der Ist-Temperatur der plastifizierten Kunststoffmasse und der Ist-Temperatur der Wandung des Zylindergehäuses, so daß die räumliche Entfernung dieser Meßstellen zu Ungenauigkeiten in der Temperaturregelung führt.

Der Erfindung liegt daher die Aufgabe zugrunde, ein Verfahren und eine Vorrichtung zur Heizungsregelung eines Schweißextruders vorzuschlagen, die einfacher und zuverlässiger ist und nach Unterbrechungen gewährleistet, daß die Schweißarbeiten sofort wieder aufgenommen werden können.

Diese Aufgabe wird erfindungsgemäß dadurch gelöst, daß die Ist-Temperatur der plastifizierten Kunststoffmasse unmittelbar im Bereich zwischen dem Schneckenende und der Austrittsöffnung der Schweißdüse gemessen und mit dem materialspezifisch vorgegebenen Sollwert der plastifizierten Kunststoffmasse verglichen wird und dies als Regelgröße für die Veränderung der Temperatur der plastifizierten Kunststoffmasse verwandt und damit die Beheizung des Zylindergehäuses sowohl während des Schweißbetriebes als auch während der Stillstandsphase entsprechend geregelt wird.

Von Vorteil bei dieser Verfahrensweise ist, daß nicht die Temperatur des Zylindergehäuses, sondern die Temperatur der plastifizierten Kunststoffmasse als Sollwert vorgegeben wird. Die Messung der Temperatur zwischen dem Schneckenende und der Austrittsöffnung der Schweißdüse hat den Vorteil, daß sie alle davor bei der Plastifizierung auftretenden Einflüsse berücksichtigt und gewährleistet, daß die richtige Temperatur für den Schweißvorgang eingehalten wird.

Durch die Messung der Temperatur sowohl während des Schweißbetriebes als auch während der Stillstandsphase und die geregelte Beheizung des Zylindergehäuses wird ein sofortiges Anfahren möglich. Der Materialverbrauch wird reduziert, da die erneute Anlaufphase entfällt.

Ferner wird der Einfluß von Störgrößen, die sich aus der unterschiedlichen Lage der Meßstellen ergeben können, vollkommen ausgeschaltet. Gleichzeitig wird die Sollwerttemperatur mit dem Ist-Wert verglichen, der unmittelbar in der plastifizierten Kunststoffmasse gemessen wird.

Um bei sicherheitsrelevanten Teilen eine Kontrolle zu haben, bietet sich in Erweiterung des erfindungsgemäßen Verfahrens an, den Verlauf der Ist-Temperatur der Kunststoffmasse während des Schweißbetriebes anzuzeigen und/oder als Protokoll aufzuzeichnen.

Für eine Vorrichtung zur Durchführung des Verfahrens ist zur Lösung der der Erfindung zugrundeliegenden Aufgabe erfindungsgemäß vorgeschlagen, daß Mittel zur Messung und Regelung der Temperatur des plastifizierten Schweißmaterials vorhanden sind, die einen Temperaturfühler umfassen, dessen Meßspitze bis in die plastifizierte Kunststoffmasse hineinragt, daß die Meßspitze im Bereich zwischen dem düsenseitigen Schneckenende und der Austrittsöffnung der Schweißdüse angeordnet ist, daß der Temperaturfühler mit einem Regler für die Heizung verbunden und dem Regler die Solltemperatur der plastifizierten Kunststoffmasse als Sollwertvorgabe eingebbar ist und daß die Regelung der Heizung sowohl während des Schweißbetriebs als auch während der Stillstandsphasen erfolgt. Es wird eine vollautomatische Temperaturregelung erreicht.

Um eine laufende Kontrolle der Ist-Temperatur vornehmen und die materialspezifischen Schweißtemperaturen berücksichtigen zu können, ist eine Temperaturanzeige vorgesehen, die gleichzeitig eine manuelle Einstellung über ein Regelelement ermöglicht.

Vorzugsweise ist die Meßspitze als PT 100 oder Thermoelement ausgebildet .

Es ist jedoch auch möglich, daß der Temperaturfühler mit einer Aufzeichnungseinrichtung für den Temperaturverlauf während des Schweißbetriebes verbunden ist.

Hierbei ergibt sich der Vorteil, daß ein Protokoll über die Schweißarbeiten hinsichtlich des Temperaturverlaufs angefertigt werden kann, welches während der Durchführung der Schweißarbeiten aufgezeichnet wird. Dies ist bei Geräten mit einer externen Messung nicht möglich.

In weiterer Ausgestaltung ist vorgesehen, daß der Temperaturfühler in den Heizmantel und/oder das Zylindergehäuse eingesetzt ist und die Meßspitze in den Innenraum des Zylindergehäuses hineinragt.

Bei der erfindungsgemäßen Verfahrensweise und Vorrichtung können auch noch extern einwirkende Größen berücksichtigt werden. So ist es zum Beispiel möglich, den Einfluß, der sich beispielsweise durch das der Schweißnahtvorbereitung dienende Heißluftgebläse auf den Bereich der plastifizierten Kunststoffmasse ergibt, wegen der nahen Anordnung des Temperaturfühlers zur Austrittsöffnung der Düse, für die Regelung der Heizung mit einzubeziehen.

Das erfindungsgemäße Verfahren und die zur Ausübung dieses Verfahrens vorgeschlagene Vorrichtung ist anhand der Zeichnung näher erläutert.

Es zeigt
- Figur 1: einen Längsschnitt durch einen Schweißextruder und
- Figur 2: eine Draufsicht zu Figur 1 mit einem Heißluftgebläse.

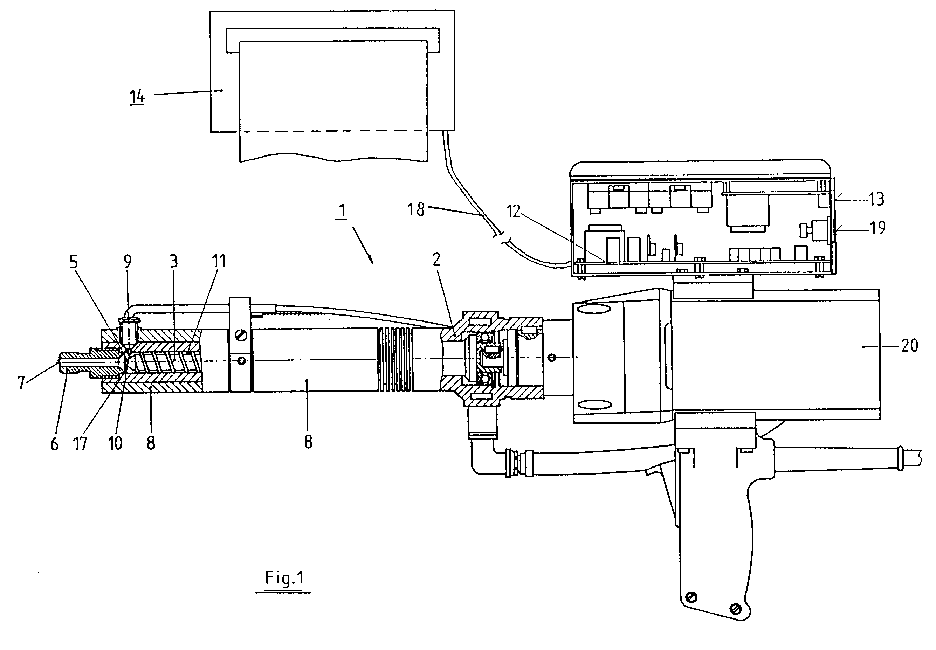

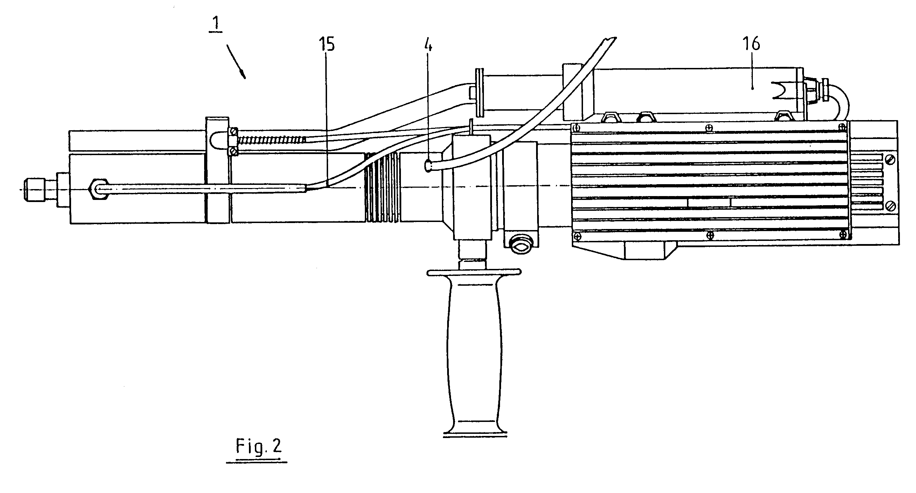

Der in den Figuren 1 und 2 dargestellte Schweißextruder 1 ist ein schnellaufendes Gerät. Es besteht aus dem Zylindergehäuse 2, in dessen Innenraum 11 die Schnecke 3 rotierend bewegbar ist. Am hinteren Ende des Zylindergehäuses 2 ist eine Einzugsöffnung 4 für die Zuführung von Kunststoffrunddraht als Schweißmaterial vorhanden, das auf dem Weg bis zum düsenseitigen Schneckenende 5 plastifiziert wird. An das Schneckenende 5 schließt sich axial nach vorne die Schweißdüse 6 an, die mit einer Austrittsöffnung 7 für den Schweißstrang versehen ist. Das Zylindergehäuse 2 ist von einem oder mehreren Heizbändern als Heizung 8 umgeben. Es handelt sich um eine elektrische Heizung. In dem Bereich, in dem die Kunststoffmasse plastifiziert ist, ist von außen in das Zylindergehäuse ein Temperaturfühler 9 eingesetzt ist, dessen Meßspitze 10 bis in den Innenraum 11 des Zylindergehäuses 2 und damit in die plastifizierte Kunststoffmasse 17 hineinragt. Der Temperaturfühler 9 ist elektrisch leitend mit einem vom Regler 12 dargestellten Regelkreis für die Heizung 8 verbunden. Ferner weist der Regler 12 eine Ist-Temperatur Anzeige 13 auf, welche laufend die vom Temperaturfühler 9 in der plastifizierten Kunststoffmasse 17 gemessene Ist-Temperatur anzeigt. Die Regelung der Temperatur kann hierbei ggf. manuell oder wie abgebildet über einen Regelkreis erfolgen. Im Falle einer Regelschaltung weist der Regler 12 einen Sollwertvorgeber 19 auf, an dem materialspezifisch die zu erreichende Ist-Temperatur der plastifizierten Kunststoffmasse 17 eingegeben werden kann. Über einen Vergleicher werden Sollwertvorgabe und Ist-Temperatur verglichen und abhängig von dem Ergebnis die Heizung 8 veranlaßt, eine stärkere oder geringere Aufheizung des Zylindergehäuses 2 vorzunehmen. Der Regler 12 ist ferner mit einer Aufzeichnungseinrichtung 14 durch die Leitung 18 verbunden. Die externe Aufzeichnungseinrichtung 14 zeichnet den Verlauf der Ist-Temperatur, die vom Temperaturfühler 9 aufgenommen wird, während des Schweißbetriebes auf.

Als Antrieb 20 für die Schnecke 3 dient eine an dem Zylindergehäuse 2 festgelegte Handbohrmaschine. Es handelt sich also um einen kleinen schnellaufenden Schweißextruder. Dieser wird vor allen Dingen zum Schweißen von Behältern oder dergleichen bzw. zur Verbindung von Platten eingesetzt. Zur Vorbereitung der Schweißnaht erfolgt eine Anwärmung der Ränder der Schweißnaht der zu verbindenden Platten durch ein Lufterhitzer 16, wie in Figur 2 dargestellt.

Vorbereitend zur Durchführung einer Schweißarbeit wird zunächst am Sollwertvorgeber 19 die materialspezifische Solltemperatur für die plastifizierte Kunststoffmasse eingegeben. Durch Aufheizung und Betätigung des Antriebes 20 erfolgt eine Aufschmelzung des zugeführten Kunststoffmateriales, wobei in der plastifizierten Kunststoffmasse 17 die Ist-Temperatur unmittelbar von der Meßspitze 10 aufgenommen wird und über den Temperaturfühler 9 und die Leitung 15 an den Regler 12 für die Heizung 8 weitergegeben wird. In dem Regler 12 wird durch den Vergleicher die Ist-Temperatur mit der Sollwertvorgabe verglichen und die Heizung 8 entsprechend geregelt. Diese Ist-Temperaturmessung durch den Temperaturfühler 9 erfolgt auch dann, wenn der Antrieb 20 vorübergehend stillgesetzt wird. Hierdurch ist gewährleistet, daß sämtliche Einflüsse berücksichtigt werden, beispielsweise auch die, daß keine Friktion mehr während der Stillstandsphase zwischen der Schnecke, dem zu plastifizierenden Kunststoffmaterial und dem Zylinder auftritt. Die Aufheizung erfolgt so, daß stets in dem Bereich, an dem der Temperaturfühler 9 die Ist-Temperatur mißt, der plastifizierte Zustand der Kunststoffmasse erhalten bleibt, so daß sofort die Schweißarbeit wieder aufgenommen werden kann.

## Patentansprüche

1. Verfahren zur Regelung der Temperatur der von einem Schweißextruder plastifizierten Kunststoffmasse, der zum Plastifizieren eine in einem Zylindergehäuse drehend antreibbar angeordnete Schnecke aufweist, wobei das Zylindergehäuse zumindest über einen Teil seiner Länge durch eine Heizung sowohl während des Schweißbetriebes als auch während der Stillstandsphasen beheizbar ist und welcher an das Schneckenende anschließend eine Schweißdüse aufweist, aus der das Schweißmaterial plastifiziert austritt, welches dem Zylindergehäuse als strangförmiger Kunststoffdraht zugeführt wird,
dadurch gekennzeichnet,
daß die Ist-Temperatur der plastifizierten Kunststoffmasse unmittelbar im Bereich zwischen dem Schneckenende und der Austrittsöffnung der Schweißdüse gemessen und mit dem materialspezifisch vorgegebenen Sollwert der plastifizierten Kunststoffmasse verglichen wird und dies als Regelgröße für die Veränderung der Temperatur der plastifizierten Kunststoffmasse verwandt und damit die Beheizung des Zylindergehäuses sowohl während des Schweißbetriebes als auch während der Stillstandsphase entsprechend geregelt wird.

2. Verfahren nach Anspruch 1,
dadurch gekennzeichnet,
daß der Verlauf der Ist-Temperatur der Kunststoffmasse während des Schweißbetriebes angezeigt und/oder als Protokoll aufgezeichnet wird.

3. Schweißextruder zur Ausübung des Verfahrens nach Anspruch 1, mit einer in einem Zylindergehäuse (2) drehend antreibbar angeordneten Schnecke zum Plastifizieren eines in Form eines Kunststoffdrahtes zugeführten Schweißmaterials, wobei das Zylindergehäuse (2) zumindest über einen Teil seiner Länge durch eine Heizung sowohl während des Schweißbetriebes als auch während der Stillstandsphasen geregelt beheizbar ist und mit einer an das Schneckenende anschließend angeordneten Schweißdüse (6), aus der das Schweißmaterial plastifiziert austritt,
dadurch gekennzeichnet,
daß Mittel zur Messung und Regelung der Temperatur des plastifizierten Schweißmaterials vorhanden sind, die einen Temperaturfühler (9) umfassen, dessen Meßspitze (10) bis in die plastifizierte Kunststoffmasse (17) hineinragt, daß die Meßspitze (10) im Bereich zwischen dem düsenseitigen Schneckenende (5) und der Austrittsöffnung (7) der Schweißdüse (6) angeordnet ist, daß der Temperaturfühler (9) mit einem Regler (12) für die Heizung (8) verbunden und dem Regler die Solltemperatur der plastifizierten Kunststoffmasse als Sollwertvorgabe eingebbar ist und daß die Regelung der Heizung (8) sowohl während des Schweißbetriebs als auch während der Stillstandsphasen erfolgt.

4. Schweißextruder nach Anspruch 3,
dadurch gekennzeichnet,
daß der Temperaturfühler (9) mit einer Temperaturanzeige (13) verbunden ist.

5. Schweißextruder nach Anspruch 3,
dadurch gekennzeichnet,
daß die Meßspitze (10) als PT 100 oder Thermo-Element ausgebildet ist.

6. Schweißextruder nach Anspruch 3,
dadurch gekennzeichnet,
daß der Temperaturfühler (9) mit einer Aufzeichnungseinrichtung (14) für den Temperaturverlauf während des Schweißbetriebes verbunden ist.

7. Schweißextruder nach Anspruch 5,
dadurch gekennzeichnet,
daß der Temperaturfühler (9) in den Heizmantel und/oder das Zylindergehäuse (2) eingesetzt ist und die Meßspitze (10) in den Innenraum (11) des Zylindergehäuses (2) hineinragt.

## Claims

1. A method of controlling the temperature of the plastic substance plasticised by a welding extruder which, for plasticising purposes, comprises a worm screw arranged in a cylinder housing so as to be rotatingly drivable, with the cylinder housing, at least along part of its length, being heatable by a heating system, both during the welding operation and during the shutdown phases, and which welding extruder comprises a welding nozzle which adjoins the worm screw end and from which there emerges the welding material in a plasticised condition, which welding material is fed into the cylinder housing in the form of an extruded plastic wire,
characterised in
that the actual temperature of the plasticised plastic substance is measured directly in the region between the worm screw end and the exit aperture of the welding nozzle and compared with the predetermined, material-specific nominal value of the plasticised plastic substance, said measured actual temperature being used as the control parameter for changing the temperature of the plasticised plastic substance, whereby the process of heating the cylinder housing is controlled accordingly both during the welding operation and during the shutdown phase.

2. A method according to claim 1,
characterised in
that the curve of the actual temperature of the plastic substance is indicated during the welding operation and/or recorded in writing.

3. A welding extruder for carrying out the method according to claim 1, having a worm screw which is rotatingly drivably arranged in a cylinder housing (2) and provided for plasticising a welding material supplied in the form of a plastic wire, with the cylinder housing (2), at least along part of its length, being heatable in a controlled way both during the welding operation and during the shutdown phases, and having a welding nozzle (6) which is arranged so as to adjoin the worm screw end and from which the welding material emerges in a plasticised condition,
characterised in
that there are provided means for measuring and controlling the temperature of the plasticised welding material, said means comprising a temperature sensor (9) whose measuring point (10) extends into the plasticised plastic substance (17); that the measuring point (10) is arranged in the region between the worm screw end (5) at the nozzle end and the exit aperture (7) of the welding nozzle (6); that the temperature sensor (9) is connected to the control unit (12) for the heating system (8) and that the nominal temperature of the plasticised plastic substance can be fed into the control unit in the form of a predetermined nominal value; and that the heating system (8) is controlled both during the welding operation and during the shutdown phases.

4. A welding extruder according to claim 3,
characterised in
that the temperature sensor (9) is connected to a temperature indicator (13).

5. A welding extruder according to claim 3,
characterised in
that the measuring point (10) is provided in the form of a PT 100 or a thermo element.

6. A welding extruder according to claim 3,
characterised in
that, during the welding operation, the temperature sensor (9) is connected to a recording device (14) for the temperature curve.

7. A welding extruder according to claim 5,
characterised in
that the temperature sensor (9) is inserted into the heating casing and/or the cylinder housing (2) and that the measuring point (10) extends into the interior (11) of the cylinder housing (2).

## Revendications

1. Procédé pour réguler la température de la masse de matière synthétique plastifiée par une extrudeuse de soudage qui présente, pour la plastification, une vis disposée dans un boîtier cylindrique en pouvant y être entraînée en rotation, le boîtier cylindrique pouvant, par un dispositif de chauffage, être chauffé au moins sur une partie de sa longueur tant pendant le fonctionnement de soudage que pendant les phases d'arrêt, et l'extrudeuse présentant, en raccordement à l'extrémité de la vis, une buse de soudage par laquelle sort à l'état plastifié le matériau de soudage qui est apporté au boîtier cylindrique sous forme de boudin de matière plastique filiforme,
**caractérisé** en ce que la température effective de la masse de matière synthétique plastifiée est mesurée dans la région située entre l'extrémité de la vis et l'ouverture de sortie de la buse de soudage et elle est comparée à la valeur de consigne allouée, spécifique du matériau, pour la masse de matière synthétique plastifiée, et cela est utilisé comme grandeur réglante pour la modification de la température du la masse de matière synthétique plastifiée, de sorte que le chauffage du boîtier cylindrique est régulé d'une manière correspondante tant pendant le fonctionnement de soudage que pendant les phases d'arrêt.

2. Procédé selon la revendication 1, **caractérisé** en ce que l'allure de la température effective de la masse de matière synthétique est, pendant le fonctionnement de soudage, affichée et/ou enregistrée sous forme de procèsverbal.

3. Extrudeuse de soudage pour la mise en oeuvre du procédé selon la revendication 1, avec une vis disposée dans un boîter cylindrique (2) en pouvant y être entraînée en rotation et destinée à plastifier un matériau de soudage qui est alimenté sous la forme d'un fil de matière synthétique, le boîtier cylindrique (2) pouvant, par un dispositif de chauffage, être chauffé au moins sur une partie de sa longueur de façon régulée tant pendant le fonctionnement de soudage que pendant les phases d'arrêt, et avec une buse de soudage (6) disposée en raccordement à l'extrémité de la vis, buse par laquelle le matériau de soudage sort à l'état plastifié, **caractérisée** en ce que des moyens sont présents pour la mesure et la régulation de la température du matériau de soudage plastifié, moyens qui comprennent un palpeur de température (9) dont le bec de mesure (10) pénètre à l'intérieur de la masse de matière synthétique plastifiée (17), en ce que le bec de mesure (10) est disposé dans la région située entre l'extrémité côté buse (5) de la vis et l'ouverture de sortie (7) de la buse de soudage (6), en ce que le palpeur de température (9) est relié à un régulateur (12) pour le dispositif de chauffage (8) et on peut entrer dans le régulateur la température de consigne de la masse de matière synthétique plastifiée comme valeur de consigne allouée, et en a que la régulation du dispositif de chauffage (8) s'effectue tant pendant le fonctionnement de soudage que pendant les phases d'arrêt.

4. Extrudeuse de soudage selon la revendication 3, **caractérisée** en ce que le palpeur de température (9) est relié à un affichage de température (13).

5. Extrudeuse de soudage selon la revendication 3, **caractérisée** en ce que le bec de mesure (10) est réalisé sous forme de PT 100 ou de thermocouple.

6. Extrudeuse de soudage selon la revendication 3, **caractérisée** en ce que le palpeur de température (9) est relié à a dispositif (14) d'enregistrement de l'allure de température pendant le fonctionnement de soudage.

7. Extrudeuse de soudage selon la revendication 5, **caractérisée** en ce que le palpeur de température (9) est installé dans la chemise de chauffage et/ou dans le boîtier cylindrique (2), et le bec de mesure (10) pénètre dans l'espace intérieur (11) du boîtier cylindrique (2).
